# EUROPEAN PATENT SPECIFICATION

(11) **EP 4 313 847 B1**
(45) Date of publication and mention of the grant of the patent: **26.02.2025**
(21) Application number: 22716397.9
(22) Date of filing: 21.03.2022
(51) Int. Cl.: C01C 1/04, C01B 3/02, C01B 3/38, C25B 1/04, C25B 15/08, C25B 15/00

(54) **PROCESS FOR AMMONIA SYNTHESIS USING GREEN HYDROGEN**
VERFAHREN ZUR AMMONIAKSYNTHESE UNTER VERWENDUNG VON GRÜNEM WASSERSTOFF
PROCÉDÉ DE SYNTHÈSE DE L'AMMONIAC À L'AIDE D'HYDROGÈNE VERT

(30) Priority: 30.03.2021 EP 21166083
(43) Date of publication of application: 07.02.2024
(73) Proprietor: CASALE SA, 6900 Lugano (CH)
(72) Inventor: PANZA, Sergio, 22100 Como (IT)
(74) Representative: M. Zardi & Co S.A.
(86) International application number: PCT/EP2022/057299
(87) International publication number: WO 2022/207386

(56) References cited:
- US-A1- 2011 243 828
- US-A1- 2012 207 663
- US-A1- 2013 108 538
- US-A1- 2020 172 394
- US-A1- 2020 172 406
- US-B2- 10 647 587

## Description

### Field of application

The present invention concerns the field of synthesis of ammonia.

### Prior art

Ammonia is produced industrially by reacting a make-up gas containing hydrogen and nitrogen in a suitable molar ratio. The make-up gas is conventionally produced by reforming a hydrocarbon source, such as natural gas.

The production of the make-up gas typically involves a reforming process and a purification of the reformed gas. The purification typically includes shift conversion of CO to CO2, removal of CO2 and methanation. The so obtained purified gas is fed to a high-pressure ammonia synthesis loop via a main syngas compressor.

In the ammonia synthesis loop, the make-up gas is reacted to form ammonia in a suitable ammonia converter. The hot ammonia-containing effluent of the converter is subject to a cooling and separation step obtaining liquid ammonia and a side stream containing unreacted hydrogen and impurities. Typically, a portion of said side stream is subject to a hydrogen recovery process and the so obtained recovered hydrogen is sent to the suction of said main syngas compressor. Another portion of said side stream is reintroduced into the ammonia converter, typically with a circulator, thus forming the above mentioned ammonia synthesis loop.

The synthesis of ammonia is performed at a high pressure, whilst the make-up gas is normally produced at a much lower pressure. For example the ammonia synthesis may be performed at about 140 bar whilst the makeup gas may be produced at about 40 bar or less. For this reason the main syngas compressor is necessary. In most embodiments the pressure at the suction side of the main syngas compressor is 15 to 35 bar.

The nitrogen required for ammonia synthesis may be introduced during the reforming process, typically in an air-fire fired secondary reforming. In some cases nitrogen may be added separately, e.g. when an air separation unit is available.

To summarize, the industrial production of ammonia relies on the reforming of hydrocarbons to produce the necessary hydrogen. Reforming is typically a fuel-fired process with considerable emissions of CO2.

There is a fast-growing interest in reducing the carbon footprint of ammonia production. Applicable norms and regulations may introduce additional taxation in relation to the CO2 emissions, e.g. by considering the amount of CO2 per ton of ammonia produced. The CO2 contained in combustion fumes may be captured but the related techniques are expensive. A promising way to achieve this goal is the production of hydrogen with a renewable energy source.

Hydrogen produced with renewable energy is termed "green" hydrogen because it does not cause emissions of CO2 in contrast with the conventional fuel-fired production by reforming. Hydrogen produced from combustion of fossil fuels is sometimes termed "grey" hydrogen. The advantage of using green hydrogen is that no CO2 is formed and therefore there is no need for expensive capture and sequestration.

An example of a process of practical interest for the production of green hydrogen is represented by electrolysis of water. The electrolysis of water requires electricity which may be produced with a renewable source, for example solar energy, leading to the production of green hydrogen with no release of CO2 in the atmosphere.

The hydrogen so produced can be injected in an existing plant typically at the suction of the syngas compressor machine or directly in the synthesis loop in addition to "grey" hydrogen increasing the plant production, decreasing the specific energy consumption of the plant and decreasing the relevant CO2 footprint.

The production of hydrogen from renewable energy sources however is typically subject to fluctuations. For example a solar-powered production of hydrogen is obviously subject to the availability of sunlight. In order to compensate for such fluctuations, a storage of green hydrogen should be provided. The storage may fully or partly replace the production of green hydrogen when the energy source is fully or partly unavailable, in order to maintain a significant contribution of the green hydrogen to the ammonia production.

The storage of hydrogen must be performed at a high pressure to be economically acceptable. For example, it is considered that a cost-effective storage of hydrogen should be performed at a pressure of at least 50 bar and typically 50 to 300 bar. Regrettably, the commercially available techniques for production of green hydrogen deliver hydrogen at a low or moderate pressure insufficient for storage. For example the available techniques for electrolysis of water can produce hydrogen typically at about 20-30 bar.

It follows that green hydrogen directed to storage requires compression. The necessary hydrogen compressor is an expensive item and consumes a lot of power, thus making the shift to green hydrogen less attractive from economic point of view. Still another problem is the commercially available compressors for hydrogen are typically volumetric compressor which are intrinsically less reliable than turbomachines like centrifugal compressors. In order to ensure acceptable reliability of the system, spare units must be installed which further increase costs.

US 2020/172406 A1 and US 2020/172394 A1 disclose methods for producing ammonia wherein a part of the hydrogen of the ammonia make-up gas is formed by reforming of hydrocarbons and another portion of the hydrogen of the ammonia make-up gas is formed by electrolysis of water. The electrolysis unit is powered by renewable energy.

### Summary of the invention

The invention aims to overcome the above drawbacks of the prior art. In particular, the present invention aims to provide a process and plant for the synthesis of ammonia wherein the use of so-called green hydrogen, that is hydrogen made from renewable energy, is made more attractive compared to the current prior art.

The aim is reached with a process according to claim 1. In the invention, ammonia is produced using hydrogen conventionally produced with a reforming process together with hydrogen produced from a renewable energy source (green hydrogen). A hydrogen storage is provided and hydrogen from said storage is used to compensate for partial or full unavailability of said renewable energy source.

Said hydrogen storage is fed with some of the hydrogen recovered from the side stream separated after the cooling and separation process of the converter effluent.

The invention comes from the finding that said recovered hydrogen may be considered a partially green hydrogen, being recovered from the ammonia synthesis loop which is fed with conventional hydrogen and green hydrogen. Hence its use to replace the green hydrogen, when the related energy source is unavailable, maintains a positive effect of reducing the overall emissions of CO2 for a given capacity in terms of ammonia produced.

On the other hand, the hydrogen recovered from the above mentioned side stream (also termed loop purge) is normally available at a high pressure, considerably higher than the pressure of production of green hydrogen. The pressure of the recovered hydrogen may be compatible with direct storage without compression. Elimination of the compressors for hydrogen storage reduces costs and consumption and removes a possible source of failure. In some embodiments the recovered hydrogen may still need be compressed, e.g. if storage is performed at a very high pressure such as 200 bar, however in any case the cost for compression of the hydrogen directed to storage will be greatly reduced thanks to the invention.

### Description of the invention

A particularly preferred process for the production of green hydrogen is electrolysis of water. The electrolysis of water may be powered by electric energy produced from one or more renewable sources, for example from solar energy.

In other embodiments, green hydrogen may be produced from biomass. Biomass is widely considered a renewable form of energy because its energy comes from the sun and it can grow in a short time. Biomass can be converted to hydrogen with a thermochemical process or a biological process such as fermentation. Preferred thermochemical processes include gasification, partial oxidation and steam reforming. The source biomass is preferably a lignocellulosic biomass. In a preferred embodiment, a biomass-to-hydrogen process includes gasification of such lignocellulosic biomass.

The hydrogen storage is performed preferably at a pressure of at least 50 bar, more preferably 50 bar to 200 bar. The hydrogen may be stored under pressure in one or more suitable storage vessels.

The recovered hydrogen may have a pressure of at least 50 bar, preferably 50 to 100 bar and particularly preferably 50 to 90 bar. Hence, said recovered hydrogen may be sent to storage without compression whenever the pressure at which the hydrogen is recovered is equal to or greater than the pressure of storage.

In embodiments where the storage pressure is higher, a compression is still required. However the invention is still advantageous due to the relatively high pressure at which the hydrogen is obtained, i.e. due to the reduced compression ratio for storage in comparison with the prior art.

In the invention, ammonia is produced partly with hydrogen conventionally produced from reforming and partly with green hydrogen. The green hydrogen may be used not only to reduce carbon footprint but also to increase capacity. The process may be considered a hybrid process due to the hybrid production of hydrogen. In a typical embodiment the hydrogen produced from renewable energy may account for up to 50% of the total hydrogen in the make-up gas, preferably for 20% to 50%. However in some embodiments the green hydrogen may account for a greater part (more than 50%) of the total hydrogen.

The green hydrogen, possibly replaced by the hydrogen from storage, may be directed to the suction side of the main syngas compressor. In a preferred embodiment, the green hydrogen may be produced at the same or substantially the same pressure as a purified make-up gas which is obtained from reforming and purification.

The main syngas compressor may have a suction line connected to a reforming front-end wherein the reforming process is performed, and further connected to the producer of the green hydrogen, such as water electrolyser, and further connected to the hydrogen storage.

The reforming process may be performed according to various techniques known in the art. The reforming process may include primary reforming in a fired furnace followed by secondary reforming with a suitable oxidant. The oxidant is normally air but may also be enriched air or pure oxygen if available. The purification of the reformed gas may include CO shift, carbon dioxide removal and methanation.

A preferred embodiment of the invention includes: reforming a hydrocarbon source in a front-end to produce ammonia make-up gas; feeding said ammonia make-up gas to an ammonia synthesis loop, including an ammonia synthesis converter, via a main syngas compressor; removing a hydrogen-containing purge stream from said ammonia loop; processing a portion of said purge stream to separate hydrogen contained therein and to obtain recovered hydrogen; providing a further hydrogen feed separately obtained from a renewable energy source, preferably by electrolysis of water; feeding said further hydrogen to the input of said main syngas compressor; providing a hydrogen storage arranged to partly or fully replace said further hydrogen feed when said renewable energy source is not fully available; feeding at least a portion of said recovered hydrogen to said hydrogen storage.

Preferably a portion of the recovered hydrogen is fed to said storage and a remaining portion is fed to the input of said main syngas compressor for its reintroduction into the ammonia synthesis loop.

In a typical embodiment the ammonia converter is part of an ammonia synthesis loop. The ammonia synthesis loop may include the ammonia converter, a make-up gas preheater, a cooling and separation stage and a circulator. The hydrogen separately produced from renewable energy, or hydrogen taken from the hydrogen storage, may be introduced into said loop at a suitable location, preferably via the main syngas compressor.

Another aspect of the invention is a plant according to the claims.

### Description of the figures

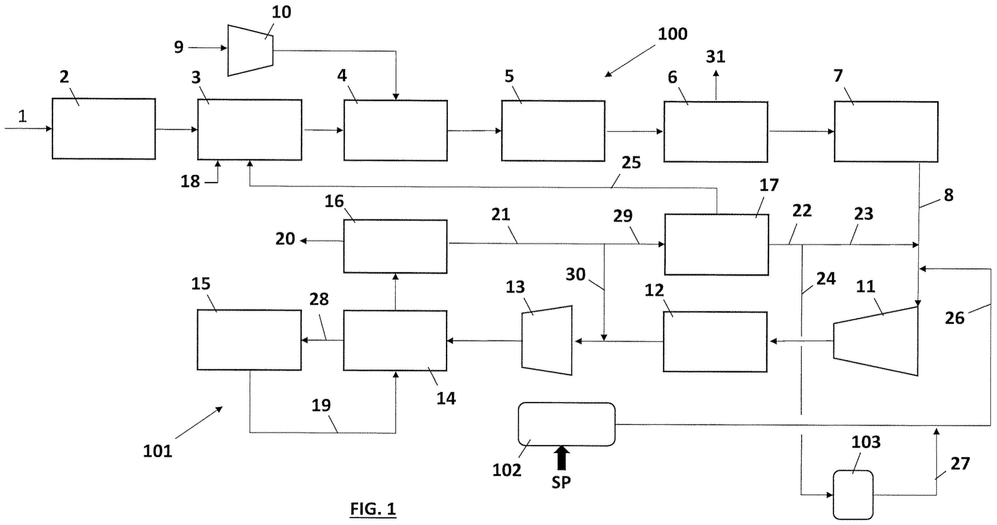

Fig. 1 is a simplified scheme of a preferred embodiment of the present invention wherein the following main items are represented.
100 reforming-based front-end
101 ammonia synthesis loop
102 solar-powered water electrolyser for production of hydrogen
103 hydrogen storage
1 hydrocarbon source, such as natural gas
2 desulfurization
3 primary reformer, such as a fired furnace
4 secondary reformer
5 shift converter(s). One or more shift converters may be provided, for example a high-temperature shift converter followed by a low-temperature shift converter.
6 carbon dioxide removal, for example by amine or carbonate solution washing or pressure swing adsorption (PSA) or another technique for removing CO2 from a gas.
7 methanation
8 purified make-up gas
9 air feed to the secondary reformer
10 air compressor
11 main syngas compressor
12 syngas driers
13 circulator
14 heat exchanger, fresh gas preheater and reaction effluent cooler
15 ammonia synthesis converter
16 cooling-separation stage
17 hydrogen recovery unit (HRU) based on membrane system or PSA or another suitable technique
18 fuel to the primary reformer 3
SP solar power, i.e. power source of the electrolyser 102

The Fig. 1 is further described below.

The natural gas 1 after desulfurization is steam reformed in the primary reformer 3 and the so obtained partially reformed gas is further processed in the secondary reformer 4. The effluent of said secondary reformer is purified to obtain the make-up gas 8.

The required amount of nitrogen may be introduced with the air feed 9 firing the secondary reformer 4.

The make-up gas 8 is fed to the ammonia loop 101 by the main syngas compressor 11. After pre-heating in the exchanger 14, the pre-heated makeup gas 28 is reacted in the ammonia converter 15.

The effluent 19 of the converter preheats the fresh make-up gas in the exchanger 14 and goes to the cooling and separation stage 16. From here, ammonia 20 and a purge gas 21 are separated.

The purge gas 21 is split into a first portion 29 and a second portion 30. The first portion 29 is sent to the HRU 17 where hydrogen is separated from other impurities, such as non-condensable gases. The second portion 30 is reintroduced in the ammonia loop 101 via the circulator 13. The circulator compensates for pressure drops maintaining the circulation in the loop 101.

The hydrogen recovery unit 17 may use a cryogenic system or a membrane-based system or a PSA. Techniques for removing hydrogen from a gas mixture are known to the skilled person and need not be described.

A stream 22 containing recovered hydrogen can be sent to the inlet of the main compressor 11 via line 23 and/or to the H2 storage 103 via line 24. In the line 24, a compressor may be provided in case the storage pressure is greater than that of stream 22, i.e. greater than the delivery pressure of the HRU 17.

The remaining gas separated in the HRU 17 may be combustible and recycled as a fuel to the primary reformer 3 with line 25.

The inlet line of the compressor 11 is connected to the electrolyser 102, via a green hydrogen feed line 26. The H2 storage 103 has an output line 27 connected to said green hydrogen feed line 26.

In operation, the main syngas compressor 11 receives the makeup gas 8 conventionally produced in the front-end 100 together with the green hydrogen of line 26 and the recovered hydrogen from line 23. For example the hydrogen from the electrolyser 102 may be about 30% of the hydrogen fed to the compressor 11.

During normal operation, the recovered hydrogen of line 24 is stored for subsequent use and the line 27 may be closed, e.g. by a suitable valve. The recovered hydrogen 22 may be sent partially or totally to the inlet of the compressor 11 or to the storage 103 depending on the conditions. For example when the storage 103 reaches full capacity, the hydrogen 22 may be fully reintroduced into the loop via line 23 whenever is required.

Based on the availability of the power source of the electrolyser 102, the hydrogen from the storage 103 may be used to partly or fully replace the production of said electrolyser 102. For example, assuming the electrolyser 102 uses solar power SP, the stored hydrogen (withdrawn from the storage 103) may be used during night time and/or cloudy conditions when the solar power drops.

It has to be noted that the recovered hydrogen 22 and the hydrogen stored in the storage 103 can be considered a "partially green" hydrogen since it is recovered from a loop partially fed with green hydrogen. Therefore the use of the storage is beneficial in terms of carbon dioxide emissions.

The carbon dioxide 31 separated from the removal unit 6 may be stored or used for another process, for example for the synthesis of urea in a tied-in urea plant. Use of the separated carbon dioxide, instead of its discharge, is clearly another advantage for reducing environmental impact.

In a typical embodiment, the makeup gas 8 is at a pressure of about 20-25 bar. The ammonia converter may operate at about 140 bar. The recovered hydrogen 22 may be at a pressure of 50 to 90 bar or above. The storage may be performed at the pressure of the stream 22 or at a greater pressure using a compressor.

## Claims

1. Process for the synthesis of ammonia wherein:
a) ammonia make-up gas containing hydrogen and nitrogen is reacted in an ammonia converter (15) at ammonia synthesis pressure obtaining an ammonia-containing effluent (19);
b) said ammonia-containing effluent is subject to a cooling and separation step (16) obtaining liquid ammonia (20) and a side stream (21) containing hydrogen and impurities;
c) at least a portion of said side stream (21) is subject to a hydrogen recovery process obtaining recovered hydrogen (22);
d) a first portion of the hydrogen contained in the ammonia make-up gas is produced by reforming a hydrocarbon source in a reforming process;
e) a second portion of the hydrogen contained in the ammonia make-up gas is produced separately from said reforming process by using a renewable energy source;
f) at least a portion (24) of said recovered hydrogen obtained at step c) is sent to a hydrogen storage (103);
g) hydrogen (27) from said storage (103) is used to fully or partly replace said second portion of hydrogen of step e) when said renewable energy source is fully or partly unavailable.

2. Process according to claim 1 wherein said second portion of hydrogen of step e) is produced by electrolysis of water.

3. Process according to claim 2 wherein the electrolysis of water is powered by solar energy.

4. Process according to any of the previous claims wherein hydrogen storage is performed at a pressure of at least 50 bar, preferably 50 bar to 200 bar.

5. Process according to any of the previous claims wherein said recovered hydrogen obtained at step c) has a pressure of at least 50 bar, preferably 50 to 100 bar.

6. Process according to any of the previous claims wherein said recovered hydrogen obtained at step c) is sent to hydrogen storage without compression when the pressure of recovery of said hydrogen is sufficient for storage, or is compressed when the storage pressure is higher than the recovery pressure.

7. Process according to any of the previous claims wherein said second portion of hydrogen, which is produced with renewable energy, accounts for up to 50% of the hydrogen in the make-up gas, preferably for 20% to 50%.

8. Process according to any of the previous claims wherein said second portion of hydrogen is produced at the same or substantially the same pressure as a purified make-up gas obtained from reforming and purification.

9. A process according to any of the previous claims, wherein said ammonia converter (15) is part of an ammonia synthesis loop (101) and the hydrogen separately produced from renewable energy or taken from the hydrogen storage is introduced into said loop.

10. A process according to any of the previous claims wherein: the reforming step includes reforming a hydrocarbon source and purification of the so obtained reformed gas, obtaining a purified reformed gas (8); feeding the purified reformed gas, possibly with the addition of nitrogen, to said ammonia converter (15) via a main syngas compressor (11); the hydrogen (26) separately produced from renewable energy is also fed to the ammonia converter via said main syngas compressor (11).

11. A process according to claim 10 wherein the hydrogen (26) separately produced from renewable energy is fed to the suction side of said main syngas compressor (11) together with the purified reformed gas (8).

12. A process according to any of the previous claims wherein a first portion of said side stream separated from the converter effluent is sent to hydrogen recovery and second portion of said side stream is reintroduced into the ammonia converter.

13. Plant for the synthesis of ammonia comprising:
a reforming front-end (100) for the generation of ammonia make-up gas by reforming a hydrocarbon source;
an ammonia synthesis loop (101) including an ammonia synthesis converter (15);
a main syngas compressor (11) with an input line connected to the front-end and a delivery line connected to the synthesis loop, so that said compressor is arranged to feed the synthesis loop with the make-up gas (8) produced in the front-end;
a green hydrogen producer device (102), such as a water electrolyser, powered by a renewable energy source, and a line (26) arranged to feed hydrogen from said green hydrogen producer device to the main syngas compressor;
a hydrogen storage (103) with a line (27) connected to the input of said main syngas compressor;
a hydrogen recovery unit (17) arranged to recover unconverted hydrogen from a purge stream (21) separated from the effluent of the ammonia converter;
wherein the plant further includes a line (24) arranged to feed recovered hydrogen from said recovery unit to said hydrogen storage.

14. A plant according to claim 13 including a control system which is configured to feed hydrogen from the hydrogen storage (103) to the main syngas compressor (11) when said renewable energy source is not fully available, to compensate for the related lack of hydrogen from the green hydrogen producer.

## Patentansprüche

1. Verfahren zur Ammoniaksynthese, wobei:
a) Ammoniak-Zusatzgas, das Wasserstoff und Stickstoff enthält, wird in einem Ammoniakkonverter (15) bei Ammoniaksynthesedruck umgesetzt, wobei ein ammoniakhaltiger Abfluss (19) gewonnen wird;
b) das ammoniakhaltiger Abfluss wird einem Kühl- und Trennschritt (16) unterzogen, wobei flüssiges Ammoniak (20) und ein Nebenstrom (21), der Wasserstoff und Verunreinigungen enthält, gewonnen werden;
c) mindestens ein Teil des Nebenstroms (21) einem Wasserstoffrückgewinnungsverfahren unterzogen wird, wobei zurückgewonnener Wasserstoff (22) gewonnen wird;
d) ein erster Teil des in dem Ammoniak-Zusatzgas enthaltenen Wasserstoffs wird durch Reformieren einer Kohlenwasserstoffquelle in einem Reformierverfahren erzeugt;
e) ein zweiter Teil des in dem Ammoniak-Zusatzgas enthaltenen Wasserstoffs wird getrennt von dem Reformierverfahren unter Verwendung einer erneuerbaren Energiequelle erzeugt;
f) mindestens ein Teil (24) des in Schritt c) erzeugten rückgewonnenen Wasserstoffs wird zu einem Wasserstoffspeicher (103) geschickt;
g) Wasserstoff (27) aus dem Speicher (103) wird verwendet, um den zweiten Teil des Wasserstoffs aus Schritt e) ganz oder teilweise zu ersetzen, wenn die erneuerbare Energiequelle ganz oder teilweise nicht verfügbar ist.

2. Verfahren nach Anspruch 1, wobei der zweite Teil des Wasserstoffs aus Schritt e) durch Elektrolyse von Wasser hergestellt wird.

3. Verfahren nach Anspruch 2, wobei die Elektrolyse von Wasser durch Solarenergie angetrieben wird.

4. Verfahren gemäß einem der vorherigen Ansprüche, wobei eine Wasserstoffspeicherung bei einem Druck von mindestens 50 bar, vorzugsweise 50 bar bis 200 bar, durchgeführt wird.

5. Verfahren gemäß einem der vorhergehenden Ansprüche, wobei der in Schritt c) erzeugte rückgewonnene Wasserstoff einen Druck von mindestens 50 bar, vorzugsweise 50 bis 100 bar, aufweist.

6. Verfahren gemäß einem der vorhergehenden Ansprüche, wobei der in Schritt c) erzeugte rückgewonnene Wasserstoff ohne Kompression zur Wasserstoffspeicherung geschickt wird, wenn der Druck der Wasserstoffrückgewinnung für die Speicherung ausreicht, oder komprimiert wird, wenn der Speicherdruck höher als der Rückgewinnungsdruck ist.

7. Verfahren gemäß einem der vorherigen Ansprüche, wobei der zweite Teil des Wasserstoffs, der mit erneuerbarer Energie erzeugt wird, bis zu 50 % des Wasserstoffs im Zusatzgas ausmacht, vorzugsweise 20 % bis 50 %.

8. Verfahren gemäß einem der vorherigen Ansprüche, wobei der zweite Teil des Wasserstoffs bei demselben oder im Wesentlichen demselben Druck wie ein gereinigtes Zusatzgas erzeugt wird, das durch Reformierung und Reinigung gewonnen wird.

9. Verfahren gemäß einem der vorhergehenden Ansprüche, wobei der Ammoniakkonverter (15) Teil eines Ammoniaksynthesekreislaufs (101) ist und der separat aus erneuerbarer Energie erzeugte oder aus dem Wasserstoffspeicher entnommene Wasserstoff in den Kreislauf eingeführt wird.

10. Verfahren gemäß einem der vorhergehenden Ansprüche, wobei: der Reformierungsschritt umfasst das Reformieren einer Kohlenwasserstoffquelle und das Reinigen des so gewonnenen reformierten Gases, wodurch ein gereinigtes reformiertes Gas (8) gewonnen wird; das gereinigte reformierte Gas wird, möglicherweise unter Zugabe von Stickstoff, über einen Haupt-Synthesegas-Kompressor (11) dem Ammoniakkonverter (15) zugeführt; der separat aus erneuerbarer Energie erzeugte Wasserstoff (26) wird ebenfalls über den Haupt-Synthesegas-Kompressor (11) dem Ammoniakkonverter zugeführt.

11. Verfahren nach Anspruch 10, wobei der separat aus erneuerbarer Energie erzeugte Wasserstoff (26) zusammen mit dem gereinigten reformierten Gas (8) der Saugseite des Haupt-Synthesegas-Kompressors (11) zugeführt wird.

12. Verfahren gemäß einem der vorhergehenden Ansprüche, wobei ein erster Teil des vom Konverterabfluss abgetrennten Nebenstroms zur Wasserstoffrückgewinnung geschickt wird und ein zweiter Teil des Nebenstroms wieder in den Ammoniakkonverter eingeführt wird.

13. Anlage zur Ammoniaksynthese, umfassend:
ein Reformierungs-Frontend (100) zur Erzeugung von Ammoniak-Zusatzgas durch Reformierung einer Kohlenwasserstoffquelle;
einen Ammoniaksynthesekreislauf (101) mit einem Ammoniaksynthesekonverter (15);
einen Haupt-Synthesegas-Kompressor (11) mit einer mit dem Front-End verbundenen Eingangsleitung und einer mit dem Synthesekreislauf verbundenen Abgabeleitung, so dass der Kompressor so angeordnet ist, dass er den Synthesekreislauf mit dem im Front-End erzeugten Zusatzgas (8) speist;
eine Vorrichtung (102) zur Erzeugung von grünem Wasserstoff, wie beispielsweise ein Wasserelektrolyseur, der durch eine erneuerbare Energiequelle angetrieben wird, und eine Leitung (26), die so angeordnet ist, dass sie Wasserstoff von der Vorrichtung zur Erzeugung von grünem Wasserstoff zum Haupt-Synthesegas-Kompressor leitet,
einen Wasserstoffspeicher (103) mit einer Leitung (27), die mit dem Eingang des Haupt-Synthesegas-Kompressors verbunden ist;
eine Wasserstoff-Rückgewinnungseinheit (17), die so angeordnet ist, dass sie nicht konvertierten Wasserstoff aus einem Spülstrom (21) zurückgewinnt, der vom Abfluss des Ammoniakkonverters getrennt wird;
wobei die Anlage ferner eine Leitung (24) umfasst, die so angeordnet ist, dass sie rückgewonnenen Wasserstoff von der Rückgewinnungseinheit zu dem Wasserstoffspeicher leitet.

14. Anlage gemäß Anspruch 13, die ein Steuersystem umfasst, das so konfiguriert ist, dass es Wasserstoff aus dem Wasserstoffspeicher (103) dem Haupt-Synthesegas-Kompressor (11) zuführt, wenn die erneuerbare Energiequelle nicht vollständig verfügbar ist, um den damit verbundenen Mangel an Wasserstoff aus der Vorrichtung zur Erzeugung von grünem Wasserstoff auszugleichen.

## Revendications

1. Processus de synthèse d'ammoniac dans lequel :
a) un gaz d'appoint pour l'ammoniac contenant de l'hydrogène et de l'azote est mis à réagir dans un convertisseur d'ammoniac (15) à une pression de synthèse d'ammoniac, permettant l'obtention d'un effluent contenant de l'ammoniac (19) ;
b) ledit effluent contenant de l'ammoniac est soumis à une étape de refroidissement et de séparation (16), permettant l'obtention d'ammoniac liquide (20) et d'un flux secondaire (21) contenant de l'hydrogène et des impuretés ;
c) au moins une partie dudit flux secondaire (21) est soumise à un processus de récupération d'hydrogène, permettant l'obtention d'hydrogène récupéré (22) ;
d) une première partie de l'hydrogène contenu dans le gaz d'appoint pour l'ammoniac est produite par reformage d'une source d'hydrocarbures dans un processus de reformage ;
e) une seconde partie de l'hydrogène contenu dans le gaz d'appoint pour l'ammoniac est produite séparément dudit processus de reformage en utilisant une source d'énergie renouvelable ;
f) au moins une partie (24) dudit hydrogène récupéré obtenu à l'étape c) est envoyée à un stockage d'hydrogène (103) ;
g) de l'hydrogène (27) dudit stockage (103) est utilisé pour remplacer entièrement ou partiellement ladite seconde partie d'hydrogène de l'étape e) lorsque ladite source d'énergie renouvelable est entièrement ou partiellement indisponible.

2. Processus selon la revendication 1 dans lequel ladite seconde partie d'hydrogène de l'étape e) est produite par électrolyse d'eau.

3. Processus selon la revendication 2 dans lequel l'électrolyse d'eau est alimentée par énergie solaire.

4. Processus selon l'une quelconque des revendications précédentes dans lequel le stockage d'hydrogène s'effectue à une pression d'au moins 50 bar, de préférence 50 bar à 200 bar.

5. Processus selon l'une quelconque des revendications précédentes dans lequel ledit hydrogène récupéré obtenu à l'étape c) présente une pression d'au moins 50 bar, de préférence 50 à 100 bar.

6. Processus selon l'une quelconque des revendications précédentes dans lequel ledit hydrogène récupéré obtenu à l'étape c) est envoyé à un stockage d'hydrogène sans compression lorsque la pression de récupération dudit hydrogène est suffisante pour le stockage, ou est comprimé lorsque la pression de stockage est supérieure à la pression de récupération.

7. Processus selon l'une quelconque des revendications précédentes dans lequel ladite seconde partie d'hydrogène, qui est produite avec de l'énergie renouvelable, constitue jusqu'à 50 % de l'hydrogène dans le gaz d'appoint, de préférence 20 % à 50 %.

8. Processus selon l'une quelconque des revendications précédentes dans lequel ladite seconde partie d'hydrogène est produite à la même ou sensiblement à la même pression qu'un gaz d'appoint purifié obtenu par reformage et purification.

9. Processus selon l'une quelconque des revendications précédentes, dans lequel ledit convertisseur d'ammoniac (15) fait partie d'une boucle de synthèse d'ammoniac (101) et l'hydrogène produit séparément à partir d'énergie renouvelable ou prélevé du stockage d'hydrogène est introduit dans ladite boucle.

10. Processus selon l'une quelconque des revendications précédentes dans lequel : l'étape de reformage inclut le reformage d'une source d'hydrocarbures et la purification du gaz reformé ainsi obtenu, permettant l'obtention d'un gaz reformé purifié (8) ; l'introduction du gaz reformé purifié, éventuellement avec l'addition d'azote, dans ledit convertisseur d'ammoniac (15) par l'intermédiaire d'un compresseur principal de gaz de synthèse (11) ; l'hydrogène (26) produit séparément à partir d'énergie renouvelable est également introduit dans le convertisseur d'ammoniac par l'intermédiaire du compresseur principal de gaz de synthèse (11).

11. Processus selon la revendication 10 dans lequel l'hydrogène (26) produit séparément à partir d'énergie renouvelable est introduit du côté aspiration dudit compresseur principal de gaz de synthèse (11) conjointement avec le gaz reformé purifié (8).

12. Processus selon l'une quelconque des revendications précédentes dans lequel une première partie dudit flux secondaire séparé de l'effluent de convertisseur est envoyée à la récupération d'hydrogène et une seconde partie dudit flux secondaire est réintroduite dans le convertisseur d'ammoniac.

13. Installation de synthèse d'ammoniac comprenant :
une unité de prétraitement de reformage (100) pour la génération d'un gaz d'appoint pour l'ammoniac par reformage d'une source d'hydrocarbures ;
une boucle de synthèse d'ammoniac (101) incluant un convertisseur de synthèse d'ammoniac (15) ;
un compresseur principal de gaz de synthèse (11) avec une conduite d'entrée raccordée à l'unité de prétraitement et une conduite de distribution raccordée à la boucle de synthèse, de sorte que ledit compresseur est conçu pour alimenter la boucle de synthèse en gaz d'appoint (8) produit dans l'unité de prétraitement ;
un dispositif de production d'hydrogène vert (102), tel qu'un électrolyseur d'eau, alimenté par une source d'énergie renouvelable, et une conduite (26) conçue pour alimenter en hydrogène dudit dispositif de production d'hydrogène vert le compresseur principal de gaz de synthèse ;
un stockage d'hydrogène (103) avec une conduite (27) raccordée à l'entrée dudit compresseur principal de gaz de synthèse ;
une unité de récupération d'hydrogène (17) conçue pour récupérer de l'hydrogène non converti d'un flux de purge (21) séparé de l'effluent du convertisseur d'ammoniac ;
dans laquelle l'installation inclut en outre une conduite (24) conçue pour alimenter en hydrogène récupéré de ladite unité de récupération ledit stockage d'hydrogène.

14. Installation selon la revendication 13 incluant un système de commande qui est configuré pour alimenter en hydrogène du stockage hydrogène (103) le compresseur principal de gaz de synthèse (11) lorsque ladite source d'énergie renouvelable n'est pas entièrement disponible, pour compenser le manque associé d'hydrogène du dispositif de production d'hydrogène vert.
